# DEMANDE DE BREVET EUROPEEN

(11) **EP 3 648 340 A1**
(43) Date de publication de la demande: **06.05.2020**
(21) Numéro de dépôt: 19203602.8
(22) Date de dépôt: 16.10.2019
(51) Int. Cl.: H02S 20/32

(54) **SYSTÈME D'ÉNERGIE SOLAIRE À CONCEPTION AMÉLIORÉE**

(30) Priorité: 30.10.2018 FR 1860055
(71) Demandeur: Commissariat à l'énergie atomique et aux énergies alternatives, 75015 Paris (FR)
(72) Inventeur: PILAT, Eric, 38054 GRENOBLE CEDEX 09 (FR); WISS, Olivier, 38054 GRENOBLE CEDEX 09 (FR)
(74) Mandataire: Brevalex

(57) **Abrégé**

L'invention se rapporte à un système d'énergie solaire photovoltaïque ou thermodynamique (1) comportant :
- une structure de support (4) ;
- un module de conversion d'énergie (2) destiné à être irradié par un rayonnement lumineux (R), ce module étant monté pivotant selon un axe de rotation (8) ;
- un dispositif de commande en rotation (20) du module, configuré pour faire varier l'inclinaison du module de conversion de manière à l'adapter à l'orientation du rayonnement (R).

Le dispositif de commande (20) comporte :
- une rangée d'actionneurs (40) comprenant chacun un organe de sortie mobile (50) dont l'extraction est thermo-commandée ;
- une roue mobile (32) centrée sur l'axe de rotation (8) et comprenant une partie périphérique (48) équipée d'une échancrure (66) configurée pour recevoir l'organe de sortie (50) d'au moins l'un des actionneurs agencé en regard de cette échancrure.

## Description

### DOMAINE TECHNIQUE

La présente invention se rapporte au domaine de l'énergie solaire, photovoltaïque ou thermodynamique, et en particulier à des systèmes comprenant des modules de conversion d'énergie à inclinaison variable.

L'invention s'applique en particulier à des systèmes destinés à être installés au sol ou sur des toitures de bâtiments.

### ÉTAT DE LA TECHNIQUE ANTÉRIEURE

Dans l'art antérieur, il est connu des systèmes d'énergie solaire photovoltaïque ou thermodynamique dont le module de conversion d'énergie présente une inclinaison commandée. Une telle variation de l'inclinaison du module est généralement mise en œuvre pour adapter, au cours d'une même journée, l'orientation de ce module à celle du rayonnement lumineux émis par le soleil. L'objectif recherché par cette commande du module est de faire en sorte qu'à tout instant de la journée, l'illumination de la surface active du module soit la plus optimale, afin d'obtenir des rendements satisfaisants. A titre d'exemple, pour un module photovoltaïque comprenant des cellules solaires définissant une surface d'absorption destinée à être directement illuminée par le rayonnement du soleil, l'objectif est de faire en sorte que ce rayonnement soit orienté le plus orthogonalement possible à la surface d'absorption, à tout instant de la journée.

Pour assurer cette variation de l'inclinaison du module de conversion d'énergie au cours de la journée, les systèmes sont équipés d'un dispositif de commande permettant de faire pivoter le module par rapport à sa structure de support. De nombreuses solutions techniques ont déjà été proposées pour la réalisation de ce dispositif de commande en rotation du module. Un tel dispositif est par exemple connu du document RU 2 406 043 C1.

Cependant, certains dispositifs de l'art antérieur présentent généralement l'inconvénient d'être basés sur une électronique de commande dont la fiabilité peut être altérée par l'environnement extérieur, et/ou qui peuvent nécessiter des calibrages fréquents, complexes et coûteux. De plus, ces dispositifs requièrent une source d'énergie extérieure onéreuse, avec généralement une fréquence et une tension constantes, ainsi qu'une boucle d'asservissement indépendante afin de corriger les éventuelles erreurs. Pour pallier ces inconvénients, il peut être mis en œuvre des solutions techniques davantage passives, voire entièrement passives en ce sens qu'elles ne requièrent pas de source d'énergie autre que le rayonnement du soleil pour assurer la commande en rotation du module. Néanmoins, ce type de solutions plus économiques peut se heurter à des insuffisances en matière de précision d'inclinaison du module.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un système d'énergie solaire photovoltaïque ou thermodynamique comportant :
- une structure de support ;
- un module de conversion d'énergie destiné à être irradié par un rayonnement lumineux, ce module de conversion étant monté pivotant relativement à la structure de support, selon un axe de rotation du module ;
- un dispositif de commande en rotation du module de conversion relativement à la structure de support, le dispositif de commande étant configuré pour faire varier l'inclinaison du module de conversion, de manière à adapter cette inclinaison à l'orientation du rayonnement lumineux.

Selon l'invention, le dispositif de commande comporte :
- une rangée d'actionneurs disposés le long d'un arc de cercle centré sur un axe d'arc de cercle, chaque actionneur comprenant un corps ainsi qu'un organe de sortie mobile dont l'extraction relativement au corps est thermo-commandée, le corps de chaque actionneur étant solidaire de la structure de support ; et
- une roue mobile centrée sur l'axe d'arc de cercle, la roue étant couplée en rotation avec le module et comprenant une partie périphérique équipée d'une échancrure configurée pour recevoir l'organe de sortie d'au moins l'un des actionneurs agencé en regard de cette échancrure.

L'invention propose ainsi une conception radicalement opposée aux réalisations antérieures, basée sur une rangée circulaire d'actionneurs qui peuvent successivement être activés au fur et à mesure du déplacement du soleil par rapport au système selon l'invention. Cette coopération entre les organes de sortie et l'échancrure de la roue mobile peut être mise à profit pour bloquer le module en rotation dans différentes inclinaisons, et/ou pour générer la mise en rotation de ce module.

Ainsi, la conception spécifique à l'invention permet des gains en matière de précision d'inclinaison du module, et/ou en matière de simplification et de coût du dispositif de commande en rotation du module.

Selon un premier mode de réalisation préféré de l'invention, l'association de la roue mobile avec la rangée d'actionneurs est prévue pour assurer le blocage en position du module, mais pas l'entraînement en rotation de ce dernier.

Pour ce faire, le dispositif de commande comprend en effet un mécanisme d'entraînement en rotation du module, ladite roue mobile faisant partie intégrante de ce mécanisme d'entraînement ou bien étant une roue suiveuse de ce mécanisme, et la rangée d'actionneurs et la roue mobile forment ensemble un mécanisme de verrouillage du module permettant de bloquer ce dernier dans plusieurs inclinaisons distinctes par rapport à la structure de support, inclinaisons dans chacune desquelles l'organe de sortie extrait d'au moins l'un des actionneurs forme un organe de verrouillage logé dans l'échancrure de la roue mobile. Grâce à cette conception, le mécanisme d'entraînement en rotation du module peut avantageusement présenter une précision modérée, puisque le blocage du module s'effectue grâce au rayonnement lumineux du soleil sur l'actionneur qui se trouve aligné avec ce rayonnement.

De préférence, l'échancrure présente une forme de rainure de largeur sensiblement identique à un diamètre de chaque organe de verrouillage, un jeu d'introduction restant naturellement prévu pour assurer la fonctionnalité désirée.

Selon un second mode de réalisation préféré de l'invention, l'association de la roue mobile avec la rangée d'actionneurs est prévue pour assurer l'entraînement en rotation du module, et de préférence également son blocage en position.

Pour ce faire, les organes de sortie forment chacun un organe d'entraînement du module dont l'extraction est configurée pour générer, lorsque cet organe se trouve en regard de l'échancrure en forme de rampe d'appui, des efforts sur cette rampe conduisant à une rotation de la roue mobile selon l'axe de rotation du module.

De préférence, le système est configuré de sorte qu'en fin de course d'extraction d'un organe d'entraînement en appui sur l'échancrure et appartenant à l'un des actionneurs, ou avant cette fin de course, l'organe d'entraînement de l'actionneur directement consécutif dans le sens de rotation de la roue mobile, se trouve également en regard de l'échancrure. Grâce à cette conception, les organes de sortie peuvent successivement entraîner le module en rotation, au fur et à mesure que la position relative du soleil évolue au cours de la journée.

Quel que soit le mode de réalisation envisagé, chaque actionneur présente de préférence un axe de translation de son organe de sortie orienté sensiblement radialement en rapport à l'axe d'arc de cercle sur lequel est centrée la roue mobile.

De préférence, le fond du corps de chaque actionneur présente une surface extérieure d'actionnement destinée à être irradiée par le rayonnement lumineux.

Préférentiellement, au moins une lentille optique est associée à chaque actionneur afin d'augmenter la concentration du rayonnement lumineux sur cet actionneur.

De préférence, le nombre d'actionneurs est compris entre dix et quinze, lesdits actionneurs étant espacés régulièrement les uns des autres sur un secteur angulaire compris préférentiellement entre 120 et 180°.

Le système comporte préférentiellement une cage solidaire de la structure de support, agencée autour de la roue mobile, et sur laquelle sont fixés les corps d'actionneurs.

L'axe d'arc de cercle sur lequel est centrée la roue mobile, et l'axe de rotation du module, sont de préférence confondus, de sorte que la roue mobile et le module soient préférentiellement solidaires en rotation selon cet axe.

Selon une alternative, l'axe d'arc de cercle sur lequel est centrée la roue mobile, et l'axe de rotation du module, sont distincts, et de préférence parallèles. Dans ce cas, la roue mobile et le module sont reliés par un dispositif de transmission de mouvement.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de face d'un système d'énergie solaire photovoltaïque ;
- la figure 2 représente une vue de face plus détaillée d'un dispositif de commande en rotation d'un module de conversion d'énergie équipant le système montré sur la figure précédente, selon un premier mode de réalisation préféré de l'invention ;
- la figure 2a représente une vue similaire à celle de la figure 2, avec le module de conversion d'énergie bloqué dans une autre inclinaison ;
- la figure 3 est une vue en coupe prise le long de la ligne III-III de la figure 2 ; et
- les figures 4a à 4c représentent des vues de face du dispositif de commande en rotation selon un second mode de réalisation préféré de l'invention, dans différents états au cours d'une rotation du module de conversion d'énergie.

### EXPOSÉ DÉTAILLÉ DE MODES DE RÉALISATION PARTICULIERS

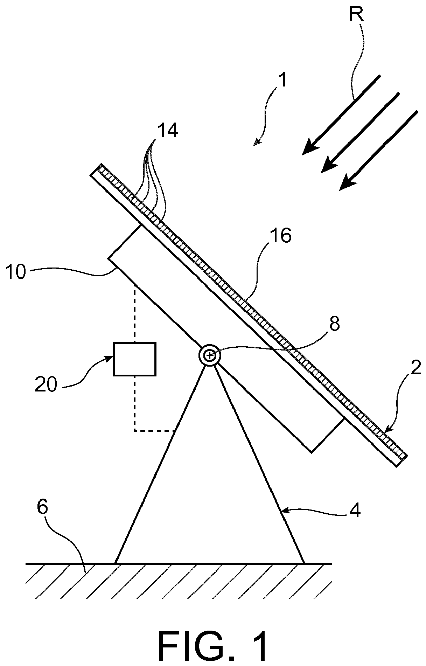

En référence tout d'abord à la figure 1, il est représenté un système d'énergie solaire photovoltaïque 1, comprenant un module de conversion d'énergie 2 ainsi qu'une structure de support 4 fixée au sol 6. Dans d'autres applications, le système 1 peut être utilisé afin d'être agencé sur une toiture d'un bâtiment. Dans le cas où il est fixé au sol, il est préférentiellement intégré à une rangée de plusieurs systèmes identiques ou similaires, cette rangée faisant partie d'une centrale solaire comportant plusieurs de ces rangées.

Le module 2 est monté pivotant sur la structure de support 4, selon un axe de rotation 8 du module. Il comprend ici un châssis 10 qui est la partie structurelle du module montée en rotation sur la structure de base 4. Le châssis 10 porte fixement une pluralité de cellules solaires 14. Ces cellules solaires photovoltaïques présentent en face avant une surface d'absorption directe 16, préférentiellement plane ou sensiblement plane. Eventuellement, les cellules 14 pourraient être de nature bifaciale, et présenter ainsi en face arrière une surface d'absorption indirecte. Les cellules solaires 4 peuvent être regroupées par panneaux, préférentiellement tous agencés sensiblement dans un même plan.

La surface d'absorption directe 16 est destinée à être directement irradiée par un rayonnement lumineux R émis par le soleil. Pour l'obtention d'un rendement optimal des cellules 14, la surface d'absorption 16 est orientée le plus orthogonalement possible au rayonnement R, comme cela a été schématisé sur la figure 1. Etant donné que l'orientation du rayonnement R évolue au cours de la journée, le module 2 est effectivement monté en rotation autour de sa structure de support 4, de manière à suivre la position du soleil. Pour créer le mouvement relatif entre le module 2 et la structure de support 4, il est ainsi prévu un dispositif de commande en rotation 20 du module de conversion d'énergie 2, ce dispositif également dénommé « *tracker* » étant configuré pour faire varier l'inclinaison du module 2 de manière à l'adapter à l'évolution de l'orientation du rayonnement lumineux R, au cours de la journée.

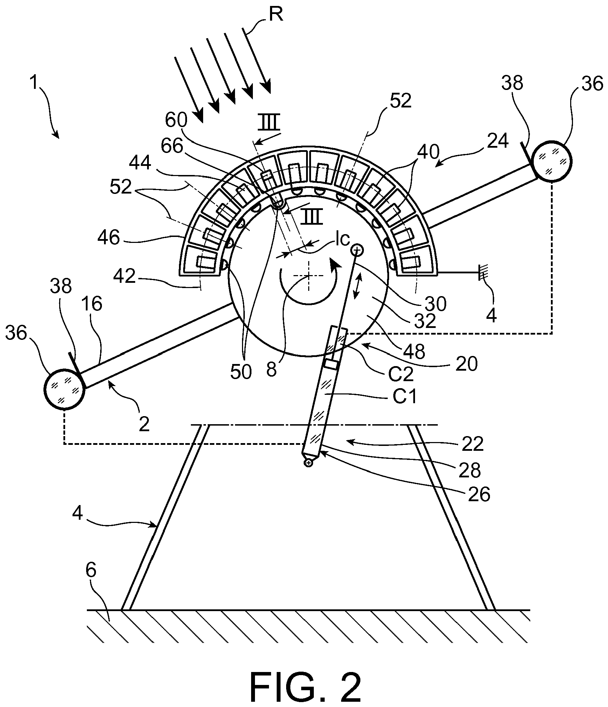

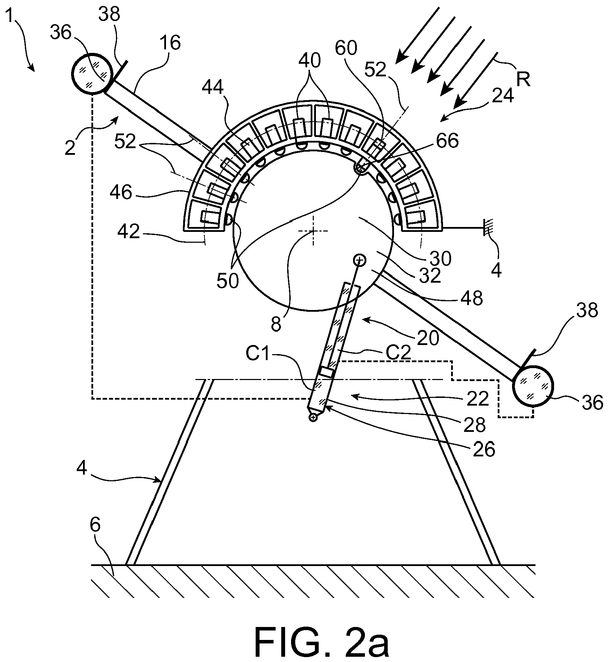

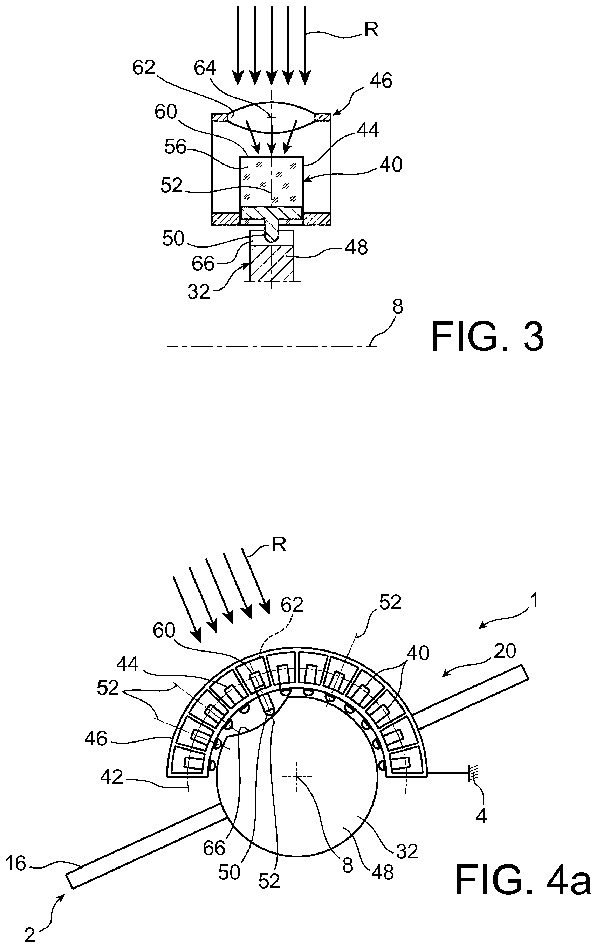

L'axe de rotation 8 du module 2 peut être orienté et incliné en fonction de la latitude de la localisation du système 1. Par exemple, pour une latitude de 45,6°N, cet axe 8 peut être orienté Nord-Sud, et incliné vers le Sud d'un angle d'environ 30° par rapport à l'horizontale. Sur la figure 1 et sur les figures 2, 2a et 4a à 4c qui seront décrites ci-après, le système est représenté dans une vue en plan orthogonale à l'axe de rotation 8, quelle que soit la réelle orientation de cet axe. Par conséquent, les notions de parallélisme et d'orthogonalité qui seront décrites ci-dessous sont à considérer dans le plan de ces vues, impliquant qu'elles ne traduisent pas nécessairement un réel parallélisme ou une réelle orthogonalité entre deux éléments présentés comme tels. A titre d'exemple, pour une latitude de 45,6°N, si l'axe 8 est orienté Nord-Sud mais pas incliné ni vers le Sud ni vers le Nord, le rayonnement lumineux R ne peut en théorie jamais être orthogonal à la surface d'absorption 16 du module. Cependant, dans le plan de la vue de la figure 1 et dans la position du module 2 représentée sur cette figure, la surface d'absorption directe 16 est bien orthogonale au rayonnement R, et ce quelle que soit l'inclinaison réelle de l'axe 8 en direction du Nord ou du Sud.

Les figures 2, 2a et 3 représentent un premier mode de réalisation préféré de l'invention, dans lequel le dispositif de commande en rotation 20 comporte un mécanisme d'entraînement en rotation 22 du module 2, associé à un mécanisme de verrouillage en position 24 de ce module.

Le mécanisme d'entraînement en rotation 22 peut être de toute conception réputée appropriée pour l'homme du métier. Il peut inclure une source d'énergie extérieure, par exemple une source électrique destinée à alimenter un moteur. Alternativement, le mécanisme 22 peut être de nature passive, basé sur un fonctionnement utilisant uniquement le rayonnement lumineux R émis par le soleil. C'est un tel mécanisme 22 qui a été représenté sur la figure 2. Il comporte globalement un vérin 26 dont le cylindre 28 est articulé sur la structure de support 4, et dont l'extrémité libre de la tige de vérin 30 est articulée sur une roue mobile en rotation 32 centrée sur l'axe 8. Le point d'articulation de la tige de vérin 30 sur la roue 32 est excentré par rapport à l'axe 8. La roue mobile 32 est ici solidaire en rotation du module 2, également capable de pivoter autour de l'axe 8. Pour activer le vérin de mise en rotation 26 de la roue mobile 32, le mécanisme d'entraînement 22 comporte deux réservoirs de fluide 36 agencé respectivement à des extrémités opposées du module 2. Lorsque le système d'énergie solaire 1 est fixé au sol, il s'agit d'une extrémité « Est » et d'une extrémité « Ouest » du module. De plus, entre chaque extrémité du module et son réservoir 36 associé, le mécanisme comprend un écran 38 s'érigeant perpendiculairement à la surface d'absorption 16 du module. Les écrans 38 peuvent alternativement être agencés de sorte que chaque réservoir 36 soit situé entre l'une des extrémités du module, et l'un des écrans 38. Les réservoirs 36 sont préférentiellement agencés symétriquement par rapport à un plan de symétrie (non représenté) passant par l'axe 8 et orthogonal à la surface d'absorption directe 16. Il en est de même pour les écrans 38 générateur d'ombre sur les réservoirs.

Chaque écran 38 est en effet configuré de manière à générer de l'ombre sur son réservoir associé 36, lorsque le rayonnement lumineux R présente une orientation différente de celle de cet écran. Par ailleurs, l'un des deux réservoirs 36 est relié fluidiquement à une chambre inférieure C1 du vérin 26, tandis que l'autre réservoir 36 est relié fluidiquement à une chambre supérieure C2 de ce même vérin. La conception est telle que lorsque l'un des deux réservoirs 36 est plus exposé au soleil que l'autre, la pression du fluide dans ce réservoir augmente et conduit à une augmentation de la pression de fluide dans la chambre associée du vérin 26. Cette augmentation de pression dans l'une des chambres conduit à un déplacement de la tige de piston 30, entraînant un pivotement du module 2 amenant l'autre réservoir dans une position davantage exposée au rayonnement lumineux R. Ce principe s'opère jusqu'à l'équilibre des pressions dans les deux réservoirs 36 et dans les deux chambres C1, C2, cet équilibre étant obtenu lorsque l'exposition des deux réservoirs 36 au rayonnement R est la même, à savoir lorsque les deux écrans 38 sont parallèles à ce rayonnement et que la surface d'absorption 16 est orthogonale ou sensiblement orthogonale à ce rayonnement R. Grâce à ce mécanisme, le module 2 se déplace au cours de la journée pour s'incliner toujours orthogonalement ou sensiblement orthogonalement au rayonnement lumineux R du soleil.

Le mécanisme de verrouillage en position 24 comporte quant à lui plusieurs éléments, parmi lesquels la roue 32 entraînant en rotation le module 2. Il est complété par une rangée d'actionneurs 40 régulièrement espacés les uns des autres le long d'un arc de cercle 42. Celui-ci est centré sur un axe d'arc de cercle, qui dans le mode de réalisation représenté, est confondu avec l'axe de rotation 8 du module. L'axe d'arc de cercle, correspondant à l'axe sur lequel est également centré la roue mobile 32, est donc confondu avec l'axe de rotation 8 du module 2, ce qui implique que cette roue 32 et le module 2 sont ici solidaires en rotation. Selon une alternative également envisagée mais non représentée, l'axe d'arc de cercle et l'axe de rotation 8 du module 2 peuvent être distincts, en étant de préférence parallèles. Dans ce cas de figure, la roue mobile 32 et le module 2 sont reliés par un dispositif de transmission de mouvement, par exemple du type à engrenages ou à courroie. Cela permet en particulier d'ajuster les vitesses et les forces associées à la roue 32 et au module 2.

A titre d'exemple indicatif, le nombre d'actionneurs 40 peut être compris entre dix et quinze. Dans le mode de réalisation préféré montré sur les figures 2, 2a et 3, il est prévu douze actionneurs 40 répartis sur un secteur angulaire correspondant ici à 180°. Les actionneurs 40 présentent chacun un corps 44 fixé sur une cage 46 en forme de barillet, cette cage étant elle-même solidaire de la structure de support 4. Plus précisément, la cage 46 est fixée sur la structure 4 en étant agencée autour d'une partie périphérique 48 de la roue mobile 32. Elle présente une forme de segment angulaire s'étendant sur 180°, définissant un creux orienté vers le sol 6, et dont les deux extrémités opposées s'inscrivent dans un plan fictif sensiblement parallèle ce même sol.

Chaque actionneur 40 comporte donc un corps 44 ainsi qu'un organe de sortie 50 mobile par rapport à ce corps, de préférence conçu pour être déplacé selon un axe de translation 52 correspondant à l'axe central longitudinal de l'actionneur. L'axe de translation 52 de chacun des actionneurs 40 est préférentiellement orienté radialement, ou sensiblement radialement en rapport avec l'axe de rotation 8.

L'une des particularités de l'invention réside dans le fait que l'extraction de l'organe de sortie 50 par rapport au corps 44, ainsi que sa rentrée dans ce même corps selon l'axe 52, est thermo-commandée. En d'autres termes, c'est l'illumination de chaque actionneur 40 qui conditionne l'étendue de sortie de l'organe 50, en fonction de l'intensité de cette illumination.

Ici, chaque actionneur 40 prend la forme d'un vérin thermo-commandé, dont le corps 44 forme le cylindre du vérin, et dont l'organe de sortie forme la tige de vérin. En fonction de l'échauffement du fluide 56 logé dans le cylindre 44, l'organe 50 reste en retrait dans ce dernier, ou bien est extrait de celui-ci.

Les vérins 40 sont tous conçus de manière identique ou similaire, et configurés pour être activés lorsque leur axe de translation 52 est parallèle au rayonnement lumineux R émis par le soleil. En cas d'inclinaison dépassant une valeur prédéterminée entre ce rayonnement R et l'axe de translation 52 d'un vérin, ce vérin est conçu pour ne pas générer l'extraction de son organe de sortie 50, orienté vers la partie périphérique 48 de la roue mobile 32. À cet égard, il est noté que le fond du cylindre 44, orienté radialement vers l'extérieur et à l'opposé de l'organe de sortie 50, présente une surface extérieure d'actionnement 60 orientée sensiblement perpendiculairement à l'axe de translation 52. C'est cette surface 60 qui est destinée à être irradiée par le rayonnement lumineux R. D'ailleurs, pour accentuer l'irradiation de chaque surface 60, une ou plusieurs lentilles optiques 62 sont agencées sur la cage 46, en présentant un centre optique 64 situé sur l'axe de translation 52 de l'actionneur associé. Ces lentilles 62 permettent de concentrer le rayonnement lumineux R sur la surface extérieure d'actionnement 60, comme cela a été schématisé sur la figure 3.

La roue mobile 32 comporte au niveau de sa partie périphérique 48 une échancrure 66 ouverte radialement vers l'extérieur, et prenant la forme d'une rainure dont la largeur circonférentielle « lc » et sensiblement identique au diamètre de chaque organe de sortie 50. Ce dernier comporte d'ailleurs une extrémité arrondie, par exemple en forme de demi-sphère, tandis que le fond de la rainure 66 présente une forme cylindrique complémentaire. Plus précisément, l'ouverture de l'échancrure se trouve au niveau d'un chant périphérique de la roue mobile 32.

Dans ce premier mode de réalisation préféré de l'invention, chaque organe de sortie 50 forme ainsi un organe de verrouillage capable de s'insérer dans la rainure 66 avec un faible jeu circonférentiel, lorsque cette rainure se trouve en regard radialement de l'organe 50 considéré. Lorsqu'une telle coopération se produit entre l'un des organes de verrouillage extrait 50, et l'échancrure en forme de rainure 66, la roue mobile 32 est bloquée en rotation autour de l'axe 8. Cela amène à bloquer le module 2 dans une inclinaison donnée, dans laquelle l'axe de translation 52 du vérin 40 thermo-actionné est sensiblement orthogonal ou orthogonal à la surface d'absorption 16 du module 2.

Le fonctionnement du système 1, selon le premier mode de réalisation, va à présent être décrit.

A un instant quelconque de la journée, le mécanisme d'entraînement 22 permet d'amener le module 2 dans l'inclinaison souhaitée par rapport au rayonnement R, c'est-à-dire de façon à placer la surface d'absorption 16 orthogonalement ou sensiblement orthogonalement à ce rayonnement. A cet instant, ce dernier adopte une orientation particulière, telle que celle montrée sur la figure 2. Ce rayonnement R illumine alors la surface d'actionnement 60 du vérin 40 dont l'axe de translation 52 est le plus parallèle à ce rayonnement. Sur la figure 2, il s'agit du cinquième vérin 40 en partant de la gauche de la figure. Ce vérin 40 fortement illuminé voit alors son organe de verrouillage 50 s'extraire du cylindre 44 en raison dans la montée en pression du fluide dans ce cylindre, avec pour conséquence l'introduction de cet organe 50 dans l'échancrure 66 en forme de rainure orientée en permanence orthogonalement à la surface d'absorption 16. Le logement de cet organe de verrouillage 50 dans la rainure 66 permet de bloquer la roue 32 en rotation selon l'axe 8, et donc de bloquer en rotation le module 2 dans l'inclinaison souhaitée relativement au rayonnement R.

Le système est configuré pour que dans cette position représentée sur la figure 2, l'illumination des deux vérins adjacents, c'est-à-dire le quatrième et le sixième, ne soit pas suffisante pour provoquer la sortie des organes 50 associés. Néanmoins, une extraction légère de leur organe 50 peut être tolérée, sans sortir du cadre de l'invention.

Ensuite, le soleil poursuit son déplacement et vient s'aligner avec le vérin suivant dans la rangée, correspondant au sixième vérin de la figure 2 lorsque celle-ci est considérée comme représentant le système 1 vu depuis le Nord. Au cours de ce déplacement du rayonnement lumineux R entre l'axe 52 de cinquième vérin et celui du sixième, l'organe de verrouillage 50 du cinquième vérin moins illuminé se rétracte. Il permet alors au mécanisme d'entraînement 22 de déplacer le module 2 déverrouillé dans une nouvelle inclinaison sensiblement orthogonale à l'axe 52 du sixième vérin. Celui-ci devenant parallèle à l'orientation du rayonnement R, son intense irradiation provoque la sortie de son organe 50 qui vient alors verrouiller le module 2 dans sa nouvelle inclinaison. Ce principe de verrouillages successifs du module 2, dans différentes inclinaisons, se produit tout au long de la journée au fur et à mesure que le soleil se déplace relativement au système 1. A titre d'exemple, la figure 2a montre le module 2 bloqué dans une autre inclinaison, grâce à l'organe 50 du neuvième vérin 40 en partant de la gauche de la figure 2a.

A présent en référence aux figures 4a à 4c, il va être décrit un système 1 selon un second mode de réalisation préféré de l'invention. Ce second mode partage de nombreuses caractéristiques techniques communes avec le premier mode décrit ci-dessus. Par conséquent, sur les figures, les éléments qui portent les mêmes références numériques correspondent à des éléments identiques ou similaires.

L'une des particularité de ce second mode de réalisation réside dans le fait que l'association entre la rangée d'actionneurs 40, et la roue mobile 32, forme un mécanisme d'entraînement en rotation du module 2 autour de l'axe 8. En effet, l'organe de sortie 50 de chaque vérin 40 forme un organe d'entraînement en rotation du module 2. Ces organes 50 peuvent également remplir la fonction d'organes de verrouillage du module 2 dans différentes inclinaisons, comme cela sera décrit ci-après.

Dans ce second mode de réalisation préféré, l'échancrure 66 ne présente plus la forme d'une rainure étroite, mais elle adopte une forme plus évasée dans la direction circonférentielle, de manière à constituer une rampe d'appui destinée à recevoir successivement les organes d'entraînement 50. L'échancrure 66 s'étend sur un secteur angulaire important, par exemple sensiblement identique à celui formé par quatre vérins 40 directement consécutifs. Cette échancrure en forme de rampe d'appui 66 présente de préférence une forme symétrique par rapport à un plan fictif sensiblement orthogonal à la surface d'absorption 16 du module 2, et passant par l'axe de rotation 8. Par conséquent, la profondeur de cette rampe d'appui 66 augmente en se rapprochant de son centre aligné radialement avec l'axe 8. Sa forme est courbe, à simple courbure, par exemple en arc de cercle convexe définissant un creux ouvert radialement vers l'extérieur.

La figure 4a montre l'état du système 1 lorsque le rayonnement lumineux R est parallèle / aligné avec l'axe de translation 52 de l'organe 50 du cinquième vérin, en partant de la gauche de cette figure. L'organe d'entraînement 50 se trouve en appui sur la rampe 66, proche du centre de celle-ci. Il se présente dans une position de fin de course d'extraction, dans laquelle son déplacement radial par rapport au cylindre 44 est maximal. Son appui sur la rampe 66 permet de bloquer la rotation de le roue 32 et du module solidaire 2 dans le sens antihoraire sur la figure 4a. Il peut même être envisagé que dans sa position de fin de course d'extraction, l'organe 50 appuie sur le centre de la rampe 66, correspondant à son fond. Dans ce cas de figure, l'organe d'entraînement 50 remplit également la fonction de verrouillage du module 2 dans l'inclinaison considérée, et ce dans les deux sens de rotation en rapport avec l'axe 8.

La figure 4a, comme les figures suivantes, représentent une partie du système 1 vue depuis le Nord, dans la direction de l'axe de rotation 8. Par conséquent, le rayonnement lumineux R du soleil se déplace de la gauche vers la droite au cours d'une journée, de même que la roue 32 et le module 2 sont configurés pour suivre ce déplacement du rayonnement R en pivotant dans le sens horaire selon l'axe 8.

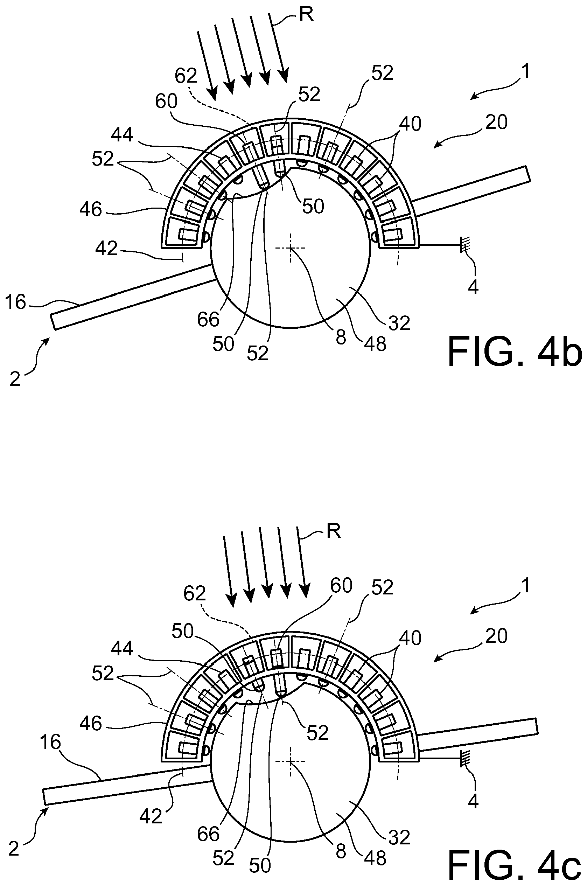

Ainsi, dans la position de la figure 4a où l'organe 50 du cinquième vérin 40 se trouve en fin de course d'extraction, la rampe 66 est suffisamment évasée pour que l'organe 50 du vérin directement consécutif dans le sens horaire, se trouve également en regard radialement de cette rampe. En d'autres termes, l'axe de translation 52 de l'organe 50 de ce sixième vérin intercepte une extrémité de la rampe 66. Par conséquent, au fur et à mesure que le rayonnement R se rapproche d'un alignement / parallélisme avec l'axe 52 de ce sixième vérin, tout en se décalant de l'axe de translation 52 du cinquième vérin, l'organe 50 du sixième vérin davantage illuminé commence à s'extraire de son cylindre. Cette extraction est configurée pour générer des efforts sur la rampe d'appui 66, et provoquer ainsi une rotation de la roue mobile 32 autour de son axe 8. Cette phase de début d'extraction de l'organe 50 du sixième vérin est schématisée sur la figure 4b. Cette figure montre par ailleurs une perte de contact entre la rampe 66 et l'organe 50 du cinquième vérin, en raison de la rotation de la roue 32 engendrée par le glissement, sur la rampe 66, de l'organe 50 du sixième vérin.

Au fur et à mesure que le rayonnement R se rapproche de l'axe de translation 52 du sixième vérin 40, l'organe d'entraînement 50 de ce sixième vérin continue de se déployer en glissant sur la rampe 66 en direction de son centre, tandis que l'organe 50 du cinquième vérin moins illuminé tend à se rétracter dans son cylindre 44. Une fois l'alignement / le parallélisme obtenu avec l'axe de translation 52 du sixième vérin 40, comme représenté sur la figure 4c, l'organe 50 de ce vérin atteint sa course de fin d'extraction le plaçant à proximité du centre de la rampe 66, tandis que l'organe 50 du cinquième vérin est quasiment entièrement rentré. De le même temps, de l'autre côté du dispositif de commande 20, l'axe de translation 52 du septième vérin 40 intercepte une extrémité de la rampe 66. Par conséquent, de manière analogue à celle exposée ci-dessus, au fur et à mesure que le rayonnement R se rapproche d'un alignement / parallélisme avec l'axe 52 de ce septième vérin, tout en se décalant de l'axe de translation 52 du sixième vérin, l'organe 50 du septième vérin est davantage illuminé et peut commencer à s'extraire de son cylindre.

Cet entraînement en rotation de la roue 32 et du module 2, par l'appui successif des organes 50 des différents vérins 40 sur la rampe 66, s'avère ainsi entièrement passif étant donné qu'il ne requiert pas d'autre source d'énergie que celle provenant du rayonnement lumineux R. La fiabilité du dispositif de commande 20, formé par la rangée annulaire d'actionneurs 40 et par la roue mobile 32, s'en trouve avantageusement renforcée.

Bien entendu, diverses modifications peuvent être apportées par l'homme du métier à l'invention qui vient d'être décrite, uniquement à titre d'exemples non limitatifs. En particulier, l'invention pourrait s'appliquer à un module équipé de miroirs pour réfléchir le rayonnement R sur la surface d'absorption 16 des cellules. En outre, le module pourrait former un concentrateur solaire, et se rapporter à une technologie thermodynamique plutôt que photovoltaïque.

## Revendications

1. Système d'énergie solaire photovoltaïque ou thermodynamique (1) comportant :
- une structure de support (4) ;
- un module de conversion d'énergie (2) destiné à être irradié par un rayonnement lumineux (R), ce module de conversion étant monté pivotant relativement à la structure de support, selon un axe de rotation (8) du module ;
- un dispositif de commande en rotation (20) du module de conversion (2) relativement à la structure de support (4), le dispositif de commande étant configuré pour faire varier l'inclinaison du module de conversion, de manière à adapter cette inclinaison à l'orientation du rayonnement lumineux (R) ;
**caractérisé en ce que** le dispositif de commande (20) comporte :
- une rangée d'actionneurs (40) disposés le long d'un arc de cercle (42) centré sur un axe d'arc de cercle, chaque actionneur comprenant un corps (44) ainsi qu'un organe de sortie mobile (50) dont l'extraction du corps est thermo-commandée, le corps (44) de chaque actionneur (40) étant solidaire de la structure de support (4) ; et
- une roue mobile (32) centrée sur l'axe d'arc de cercle, la roue (32) étant couplée en rotation avec le module (2) et comprenant une partie périphérique (48) équipée d'une échancrure (66) configurée pour recevoir l'organe de sortie (50) d'au moins l'un des actionneurs agencé en regard de cette échancrure.

2. Système selon la revendication 1, **caractérisé en ce que** le dispositif de commande (20) comprend un mécanisme d'entraînement en rotation (22) du module, ladite roue mobile (32) faisant partie intégrante de ce mécanisme d'entraînement ou bien étant une roue suiveuse de ce mécanisme, et **en ce que** la rangée d'actionneurs (40) et la roue mobile (32) forment ensemble un mécanisme de verrouillage (24) du module (2) permettant de bloquer ce dernier dans plusieurs inclinaisons distinctes par rapport à la structure de support (4), inclinaisons dans chacune desquelles l'organe de sortie extrait (50) d'au moins l'un des actionneurs (40) forme un organe de verrouillage logé dans l'échancrure (66) de la roue mobile (32).

3. Système selon la revendication 2, **caractérisé en ce que** l'échancrure (66) présente une forme de rainure de largeur (lc) sensiblement identique à un diamètre de chaque organe de verrouillage (50).

4. Système selon la revendication 1, **caractérisé en ce que** les organes de sortie (50) forment chacun un organe d'entraînement du module dont l'extraction est configurée pour générer, lorsque cette organe (50) se trouve en regard de l'échancrure (66) en forme de rampe d'appui, des efforts sur cette rampe conduisant à une rotation de la roue mobile (32) selon l'axe de rotation (8) du module.

5. Système selon la revendication 4, **caractérisé en ce qu'**il est configuré de sorte qu'en fin de course d'extraction d'un organe d'entraînement (50) en appui sur l'échancrure (66) et appartenant à l'un des actionneurs, ou avant cette fin de course, l'organe d'entraînement (50) de l'actionneur (40) directement consécutif dans le sens de rotation de la roue mobile (32), se trouve également en regard de l'échancrure (66).

6. Système selon l'une quelconque des revendications précédentes, **caractérisé en ce que** chaque actionneur (40) présente un axe de translation (52) de son organe de sortie (50) orienté sensiblement radialement en rapport à l'axe d'arc de cercle sur lequel est centré la roue mobile (32).

7. Système selon l'une quelconque des revendications précédentes, **caractérisé en ce que** le fond du corps (44) de chaque actionneur (40) présente une surface extérieure d'actionnement (60) destinée à être irradiée par le rayonnement lumineux (R).

8. Système selon l'une quelconque des revendications précédentes, **caractérisé en ce qu'**au moins une lentille optique (62) est associée à chaque actionneur (40) afin d'augmenter la concentration du rayonnement lumineux sur cet actionneur.

9. Système selon l'une quelconque des revendications précédentes, **caractérisé en ce que** le nombre d'actionneurs (40) est compris entre dix et quinze, lesdits actionneurs étant espacés régulièrement les uns des autres sur un secteur angulaire compris entre 120 et 180°.

10. Système selon l'une quelconque des revendications précédentes, **caractérisé en ce qu'**il comprend une cage (46) solidaire de la structure de support (4), agencée autour de la roue mobile (32), et sur laquelle sont fixés les corps d'actionneurs (44).

11. Système selon l'une quelconque des revendications précédentes, **caractérisé en ce que** l'axe d'arc de cercle sur lequel est centrée la roue mobile (32), et l'axe de rotation (8) du module (2), sont confondus, et **en ce que** la roue mobile (32) et le module (2) sont solidaires en rotation selon cet axe (8).

12. Système selon l'une quelconque des revendications 1 à 10, **caractérisé en ce que** l'axe d'arc de cercle sur lequel est centrée la roue mobile (32), et l'axe de rotation (8) du module (2), sont distincts, de préférence parallèles, et **en ce que** la roue mobile (32) et le module (2) sont reliés par un dispositif de transmission de mouvement.
